# EUROPEAN PATENT APPLICATION

(11) **EP 0 958 769 A1**
(43) Date of publication of application: **24.11.1999**
(21) Application number: 99108607.5
(22) Date of filing: 10.05.1999
(51) Int. Cl.: A47J 31/00

(54) **Portable coffee maker set**

(30) Priority: 13.05.1998 KR 9818062
(71) Applicant: Park Myeong Jin, Seoul (KR)
(72) Inventor: Park Myeong Jin, Seoul (KR)
(74) Representative: Beetz & Partner Patentanwälte

(57) **Abstract**

Disclosed is a portable coffee maker set. The portable coffee maker set (10) comprises a coffee pack (11) having coffee bean powder; a brewing receptacle (12) for receiving and brewing the coffee bean powder; a coffee strainer (13) for being put in the brewing receptacle (12) to strain the coffee bean powder; a cup (14) for collecting coffee liquid brewed by the brewing receptacle (12) and rendering easy drinking thereof; and a wrapper (15, 16) for packaging the coffee pack (11), brewing receptacle (12), coffee strainer (13) and cup (14).

## Description

### BACKGROUND OF THE INVENTION

### Field of the Invention

The present invention relates to a portable coffee maker set, and more particularly, the present invention relates to a portable coffee maker set which can be used outdoors such as in an open field as well as indoors such as in an office or home, to render easy drinking of coffee made by brewing coffee beans.

### Description of the Related Art

Generally, coffee is classified into instant coffee and coffee made by brewing coffee beans. Instant coffee is made by roasting and milling coffee beans, brewing milled powder of the coffee beans, and concentrating and drying brewed coffee liquid. The instant coffee is provided in the form of particles or granules relying upon a drying process thereof, to allow a consumer to instantly drink the coffee without a separate treatment.

The particle type instant coffee is prepared by a vacuum-drying procedure, and the granule type instant coffee is prepared by a freeze-drying procedure.

The vacuum-drying procedure is performed by vacuum-evaporating concentrated coffee liquid while blowing a hot blast, by which procedure the particle type instant coffee results. The freeze-drying procedure is performed by freeze-concentrating the coffee liquid, by which procedure the granule type instant coffee results.

While the instant coffee is advantageous in that it can be instantly drunk by optionally putting it together with cream and sugar in a cup and pouring hot water into the cup, it has an inferior aroma and taste compared to coffee brewed from milled coffee beans.

The brewed coffee is prepared in that a consumer directly mills coffee beans, which are circulated in the market in a roasted state, and brews milled coffee bean powder by hand.

In other words, when it is desired to drink coffee made by directly brewing coffee beans indoors such as in an office or home, the coffee beans are milled by a separate coffee mill to form coffee bean powder which is in turn put in a separate brewing machine to be brewed.

As described above, although brewed coffee made by directly brewing coffee beans has a superior aroma and taste compared to instant coffee, due to the fact that it is necessary to furnish a separate coffee mill and a coffee brewing machine, the brewed coffee can be drunk in a place, such as in an office or home, where the coffee mill and the coffee brewing machine can be furnished with but it is difficult to directly produce the brewed coffee in a place such as in an open field. This is because it is impossible to move outdoors a coffee mill and a coffee brewing machine.

In particular, in case of instant coffee, since the coffee particles or granules, cream and sugar are packed into small pouches to render easy use thereof, convenience of a consumer upon drinking the instant coffee is ensured.

### SUMMARY OF THE INVENTION

Accordingly, the present invention has been made in an effort to solve the problems occurring in the related art, and an object of the present invention is to provide a portable coffee maker set which allows coffee made by brewing coffee beans to be easily drunk, as in when making instant coffee, outdoors such as in an open field as well as indoors such as in an office or home.

According to the present invention, there is provided a portable coffee maker set comprising: a coffee pack having coffee bean powder; a brewing receptacle for receiving and brewing the coffee bean powder; a coffee strainer for being put in the brewing receptacle to strain the coffee bean powder; a cup for collecting coffee liquid brewed by the brewing receptacle and rendering easy drinking thereof; and a wrapper for packaging the coffee pack, brewing receptacle, coffee strainer and cup.

### BRIEF DESCRIPTION OF THE DRAWINGS

The above objects, and other features and advantages of the present invention will become more apparent after a reading of the following detailed description when taken in conjunction with the drawings, in which:
FIG. 1 is an exploded perspective view of a portable coffee maker set in accordance with an embodiment of the present invention and shows several embodiments of strainers;
FIG. 2 is a cross-sectional view illustrating the portable coffee maker set which is in a packaged state;
FIG. 3 is a cross-sectional view of a portable coffee maker set in accordance with another embodiment of the present invention, which is in a packaged state; and
FIG. 4 is a cross-sectional view illustrating the portable coffee maker set which is being used.

### DETAILED DESCRIPTION OF THE PREFERRED EMBODIMENTS

Reference will now be made in greater detail to a preferred embodiment of the invention, an example of which is illustrated in the accompanying drawings. Wherever possible, the same reference numerals will be used throughout the drawings and the description to refer to the same or like parts.

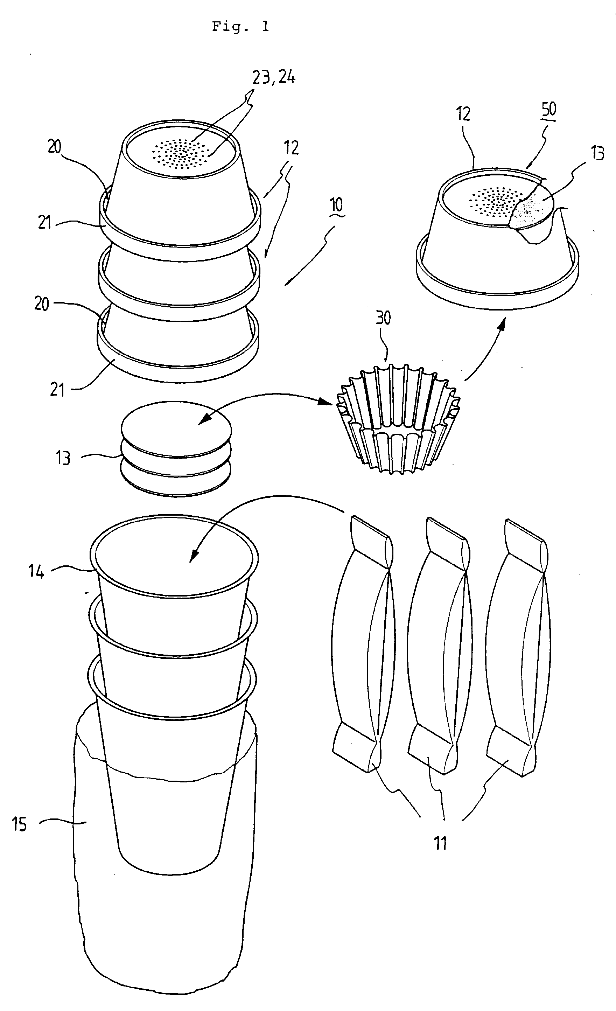

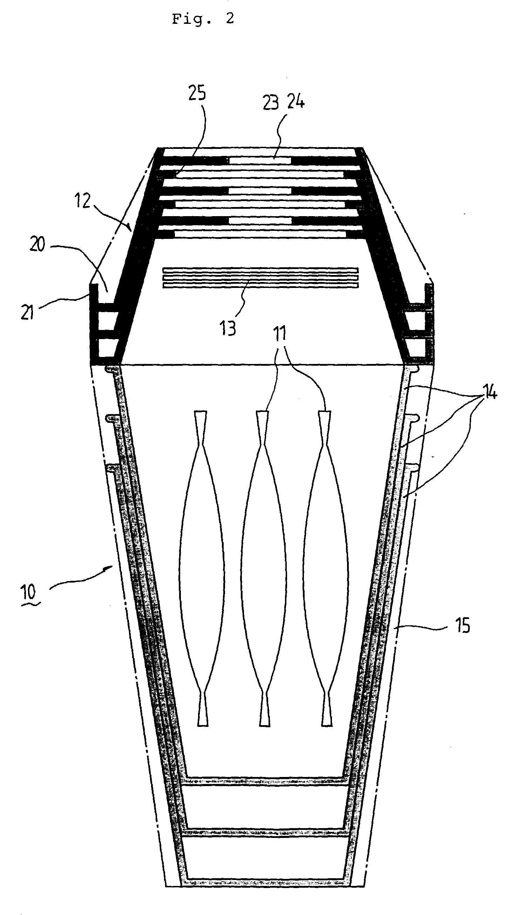

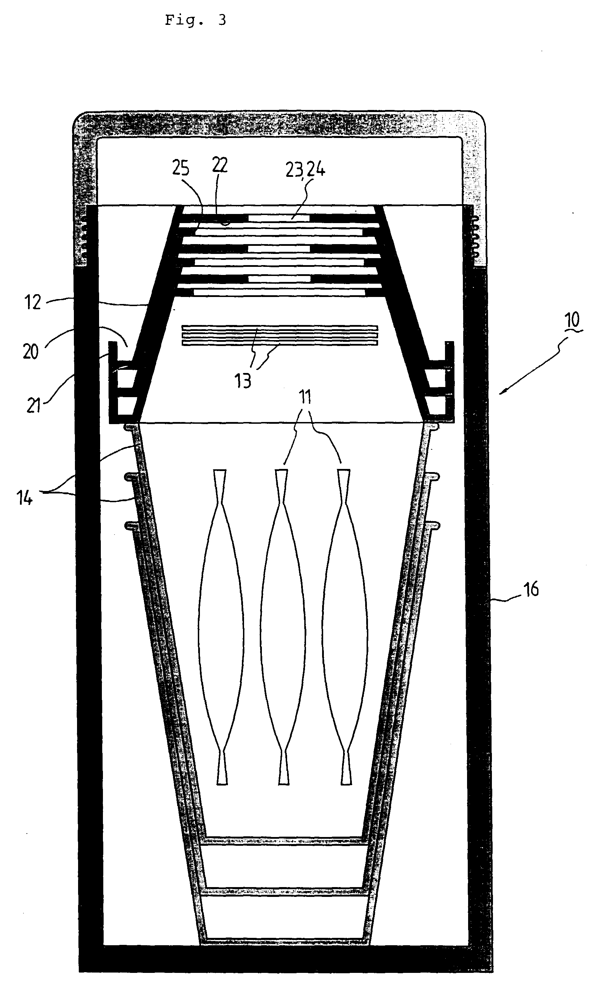

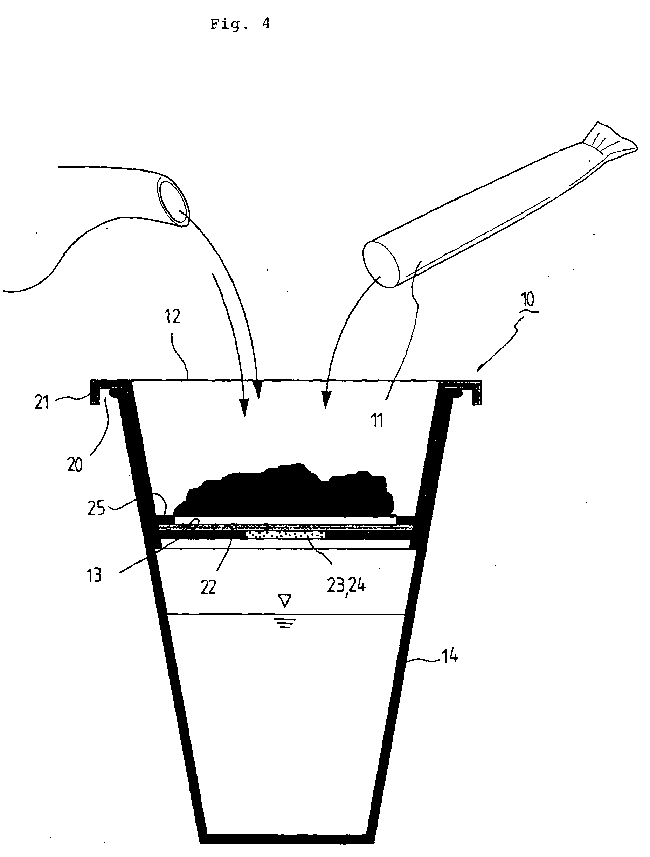

Referring to FIG. 1, there is illustrated an exploded perspective view of a portable coffee maker set in accordance with an embodiment of the present invention. FIG. 2 is a cross-sectional view illustrating the portable coffee maker set which is in a packaged state; FIG. 3 is a cross-sectional view of a portable coffee maker set in accordance with another embodiment of the present invention, which is in a packaged state; and FIG. 4 is a cross-sectional view illustrating the portable coffee maker set which is being used.

A portable coffee maker set 10 of the present invention includes a coffee bean pack 11 having coffee bean powder, a brewing receptacle 12 for receiving and brewing the coffee bean powder contained in the coffee bean pack 11, a coffee strainer 13 for being put in the brewing receptacle 12 to strain the coffee bean powder, and a cup 14 for collecting coffee liquid brewed by the brewing receptacle 12 and rendering easy drinking thereof. The coffee bean pack 11, brewing receptacle 12, coffee strainer 13 and cup 14 are packaged into a vinyl sheet 15 by a vacuum packaging process or accommodated into a separate container 16.

While it is possible to pack the coffee bean powder in vinyl pouches to have various contours, it is preferred in view of post-processing capability (associated with processing of a packing sheet and brewed coffee bean powder) after brewing, to pack the coffee bean powder in tea bag type pouches.

At this time, it is also preferred that a plurality of coffee bean packs 11, brewing receptacles 12, coffee strainers 13 and cups 14 are packaged into the vinyl sheet 15 or accommodated into the separate container 16, to allow several persons to simultaneously drink the brewed coffee or to allow a person to drink the brewed coffee a number of times, in effect, brewing an amount of coffee sufficient for more than one cup.

The brewing receptacle 12 has a bottom wall portion 22 and a side wall portion. The bottom wall portion 22 of the brewing receptacle 12 has an outer diameter less than an inner diameter of the cup 14, to allow the brewing receptacle 12 to be introduced into the cup 14. The side wall portion of the brewing receptacle 12 has a lower end which is fastened to the bottom wall portion 22 and an upper end which is provided with engaging means for preventing the brewing receptacle 12 from falling to the bottom of the cup 14 and allowing the brewing receptacle 12 to hang over at an upper end of the cup 14. The engaging means comprises a sleeve 21 which is integrally formed with the upper end of the side wall portion of the brewing receptacle 12. The sleeve 21 defines a circumferential groove into which the upper end of the cup 14 is inserted. The bottom wall portion 22 of the brewing receptacle 12 is formed with a plurality of perforations 23 and 24 through which the brewed coffee liquid flows to be collected into the cup 14.

The brewing receptacle 12 has an inward flange 25 which is fastened to an inner surface of the side wall portion adjacent the lower end thereof. The coffee strainer 13 is intervened between the bottom wall portion 22 and the inward flange 25 of the brewing receptacle 12.

As shown in FIG. 1, according to another embodiment of the present invention, it is preferred that a folding strainer paper 30 having a cup-shaped configuration is used. Further, even in the case that the strainer papers 13 and 30 are not employed, the brewing receptacle 12 can function by itself to strain the coffee bean powder.
Strainer paper 13 can be replaced with folded type strainer 30, or the fixed strainer paper 13 onto the bottom of brewing receptacle 12 indicated as 50.

When drinking the brewed coffee, the vinyl sheet 15 or the container 16 is first opened, and the cups 14, brewing receptacles 12, coffee bean packs 11 and strainer papers 13 are taken out of the vinyl sheet 15 or the container 16.

In this state, the brewing receptacle 12 is suspended by the upper end of the cup 14 due to the fact that the upper end of the cup 14 is inserted into the circumferential groove 20 formed in the brewing receptacle 12. Then, the strainer paper 13 is intervened between the bottom wall portion 22 and the inward flange 25 of the brewing receptacle 12 to be fixedly positioned therebetween. Thereafter, the coffee bean powder contained in the coffee bean pack 11 is poured onto the strainer paper 13, and hot water is poured into the brewing receptacle 12 to brew the coffee bean powder, whereby the brewed coffee liquid is collected into the cup 14 after passing through the plurality of perforations 23 and 24.

Then, a person can drink the brewed coffee liquid by removing from the cup 14 the brewing receptacle 12 in which the strainer paper 13 and the coffee bean powder are left.

When the brewing receptacle 12 is suspended by the upper end of the cup 14, a lower portion of the brewing receptacle 12 is introduced into the cup 14, and the sleeve 21 is saddled onto an edge of the upper end of the cup 14. At this time, as described above, the brewing receptacle 12 is maintained in the suspended state to brew the coffee bean powder, due to the fact that the upper end of the cup 14 is inserted into the circumferential groove 20 formed in the brewing receptacle 12.

As stated above, by the present invention, coffee made by brewing coffee beans can be drunk indoors such as in an office or home without a separate coffee mill or a coffee brewing machine. Also, the coffee made by brewing coffee beans can be drunk outdoors such as in an open field only by additionally preparing hot water as in when making instant coffee.

As a result, by a portable coffee maker set according to the present invention, advantages are provided in that since coffee made by brewing coffee beans can be drunk indoors such as in an office or home without a separate coffee mill and a coffee brewing machine, convenience of a consumer is elevated. In particular, the coffee made by brewing coffee beans can be easily and simply drunk outdoors such as in an open field.

In the drawings and specification, there have been disclosed typical preferred embodiments of the invention and, although specific terms are employed, they are used in a generic and descriptive sense only and not for purposes of limitation, the scope of the invention being set forth in the following claims.

## Claims

1. A portable coffee maker set (10) comprising:
a coffee pack (11) having coffee bean powder;
a brewing receptacle (12) for receiving and brewing the coffee bean powder;
a coffee strainer (13) for being put in the brewing receptacle (12) to strain the coffee bean powder;
a cup (14) for collecting coffee liquid brewed by the brewing receptacle (12) and rendering easy drinking thereof; and
a wrapper (15, 16) for packaging the coffee pack (11), brewing receptacle (12), coffee strainer (13) and cup (14).

2. The portable coffee maker set as claimed in claim 1,
wherein the wrapper comprises a vinyl sheet (15) for vacuum-packaging the coffee pack (11), brewing receptacle (12), coffee strainer (13) and cup (14).

3. The portable coffee maker set as claimed in claim 1,
wherein the wrapper comprises a container (16) for accommodating therein the coffee pack (11), brewing receptacle (12), coffee strainer (13) and cup (14).

4. The portable coffee maker set as claimed in claim 1,
wherein the brewing receptacle (12) has a bottom wall portion (22) and a side wall portion, the bottom wall portion (22) being formed with a plurality of perforations (23, 24) through which the brewed coffee liquid flows to be collected into the cup (14), the side wall portion having a lower end which is fastened to the bottom wall portion (22) and an upper end which is integrally formed with a sleeve (21), the sleeve (21) defining a circumferential groove into which an upper end of the cup (14) is inserted for preventing the brewing receptacle from falling to the bottom of the cup (14).

5. The portable coffee maker set as claimed in claim 1,
wherein the brewing receptacle (12) has an inward flange (25) which is fastened to an inner surface of the side wall portion adjacent the lower end thereof, the coffee strainer (13) being intervened between the bottom wall portion (22) of the brewing receptacle (12) and the inward flange (25).

6. The portable coffee maker set as claimed in claim 1,
wherein a plurality of coffee packs (11), brewing receptacles (12), coffee strainers (13) and cups (14) are packaged by the wrapper (15, 16).

7. The portable coffee maker set as claimed in claim 1,
wherein strainer paper (13) can be replaced with folded type strainer (30), or the fixed strainer paper (13) onto the bottom (50) of brewing receptacle (12).
